# FASCICULE DE BREVET EUROPEEN

(11) **EP 4 140 013 B1**
(45) Date de publication et mention de la délivrance du brevet: **01.05.2024**
(21) Numéro de dépôt: 21717042.2
(22) Date de dépôt: 06.04.2021
(51) Int. Cl.: B60L 58/20, H02J 7/02, B60L 53/22, H02M 1/12, H02M 7/219

(54) **CHARGEUR DE BATTERIES POUR VEHICULE AUTOMOBILE, VEHICULE ET PROCEDE DE MISE EN OEUVRE ASSOCIES**
BATTERIELADEGERÄT FÜR EIN KRAFTFAHRZEUG, FAHRZEUG UND VERFAHREN ZUM BETRIEB DESSELBEN
BATTERY CHARGER FOR A MOTOR VEHICLE, VEHICLE AND METHOD FOR ITS USE

(30) Priorité: 27.04.2020 FR 2004179
(43) Date de publication de la demande: 01.03.2023
(73) Titulaire: Ampere SAS, 92100 Boulogne-Billancourt (FR); Nissan Motor Co., Ltd., Yokohama-shi, Kanagawa 221-0023 (JP)
(72) Inventeur: LOUDOT, Serge, 91190 Villiers Le Bacle (FR)
(74) Mandataire: Renault Group
(86) Numéro de dépôt international: PCT/EP2021/058865
(87) Numéro de publication internationale: WO 2021/219324

(56) Documents cités:
- WO-A1-2019/199964
- FR-A1- 2 518 306
- FR-A1- 3 041 833

## Description

La présente invention concerne un chargeur de batteries pour un véhicule automobile.

La présente invention concerne plus particulièrement un chargeur de batteries pour charger des batteries de tensions différentes, un véhicule comportant un tel chargeur et un procédé de mise en oeuvre d'un tel chargeur.

Les véhicules automobiles peuvent être équipés d'une motorisation électrique comportant des moteurs électriques ou d'une motorisation hybride combinant par exemple un moteur thermique et des moteurs électriques, des batteries de traction pour stocker de l'énergie afin d'alimenter les moteurs électriques, et des chargeurs pour recharger les batteries de traction.

Les chargeurs de batteries sont généralement conçus pour charger les batteries à partir d'un réseau électrique monophasé ou triphasé de sorte qu'il ne soit pas possible de charger une batterie de traction à partir des deux types de réseau électrique avec un même chargeur.

Suivant le type de motorisation, la tension aux bornes des batteries de traction varie fortement et s'étend généralement de 150 volts à 450 volts voire 800V dans certains cas.

Des ensembles auxiliaires consommant une puissance électrique importante, généralement supérieure à 1 kilowatt, et reliés aux batteries de traction, doivent être adaptés pour fonctionner de façon optimale à la tension présente aux bornes des batteries de traction.

Les ensembles auxiliaires comprennent par exemple des compresseurs de climatisation, des éléments chauffants et des convertisseurs de puissance électrique continu-continu en charge d'alimenter le réseau basse tension 12V du véhicule.

Cependant, l'adaptation des ensembles auxiliaires aux différentes plages de tension des batteries de traction entraîne des difficultés techniques et des surcoûts importants liés notamment aux coûts de développement, au coût unitaire des ensembles auxiliaires produits en plus petite série, et au coût de stockage et de gestion des différentes références d'ensembles auxiliaires.

On pourra se référer au document WO2019/199964 qui divulgue des dispositifs de charge en triphasé ou en monophasé reliés à un réseau électrique et comprenant une première sortie reliée à une batterie haute tension et une deuxième sortie reliée à une batterie basse tension, les dispositifs comportant de multiples étages de redressement.

Les dispositifs de charge transfèrent de l'énergie électrique du réseau vers les batteries et d'une batterie à l'autre.

Cependant, les dispositifs de charge sont conçus pour fonctionner à partir d'un réseau monophasé ou d'un réseau triphasé.

De plus, les topologies des dispositifs de charge comportent une multitude d'entrées et de sorties et des circuits magnétiques complexes rendant les dispositifs volumineux, complexes à réaliser et présentant des rendements de conversion énergétique médiocres.

Le document CN110149053 divulgue un dispositif de charge permettant d'échanger des flux d'énergie électrique entre trois sources d'énergie électrique continue.

Cependant, le dispositif ne permet pas de charger l'une des sources de tension continue à partir d'un réseau électrique domestique à tension alternative.

Le document intitulé « Analysis and design of multiport DC/DC converter for next génération hybrid vehicle subsystems » (Toyota R&D Review, Vol 48 N°2 (2017)) propose un convertisseur de puissance électrique continue permettant d'alimenter deux circuits à partir d'une batterie, les tensions aux bornes des deux circuits étant différentes et inférieures à la tension aux bornes de la batterie.

Cependant, le convertisseur de puissance ne permet pas de charger la batterie à partir d'un réseau électrique.

On pourra également se référer au document intitulé « Consideration of PDM and power decoupling method in an isolated single-phase matrix converter for battery charger » (Toyota R&D Review, Vol 48 N°2 (2017)) divulguant un dispositif de charge comprenant un circuit primaire et un circuit secondaire, le circuit primaire comportant un étage d'entrée monophasé à conversion matricielle directe.

Le dispositif de charge permet de réduire l'harmonique de rang 2 dans le circuit secondaire lors d'une charge à partir d'un réseau électrique monophasé.

Cependant, le chargeur ne permet pas de charger des batteries de tensions différentes.

De plus, le chargeur fonctionne à partir d'un réseau électrique monophasé.

Il est donc proposé de pallier tout ou partie des inconvénients des dispositifs de charge selon l'état de la technique, notamment en proposant un chargeur compact alimentant des batteries de tensions différentes, fonctionnant indifféremment à partir d'un réseau électrique monophasé ou triphasé, et présentant un rendement amélioré.

Au vu de ce qui précède, l'invention propose un chargeur de batteries pour véhicule automobile comprenant un circuit primaire destiné à être relié à un réseau d'alimentation électrique, ledit circuit primaire comportant trois convertisseurs aptes à être reliés chacun en entrée à une phase d'un réseau triphasé, et deux circuits secondaires reliés au circuit primaire par l'intermédiaire d'un transformateur.

Le transformateur comprend trois plots haute tension et un plot basse tension, le circuit primaire et un premier circuit secondaire étant relié aux plots haute tension, le deuxième circuit secondaire étant relié au plot basse tension, les plots haute tension et basse tension étant disposés dans le transformateur de sorte que les inductances mutuelles entre des bobinages du circuit primaire soient égales et de sorte que les inductances mutuelles entre chacun des bobinages du circuit primaire et un bobinage du deuxième circuit secondaire soient égales, cette condition étant satisfaite par une équidistance des plots haute tension entre eux et une équidistance entre chacun des plots haute tension et le plot basse tension.

Selon une caractéristique, chaque convertisseur du circuit primaire triphasé est relié en sortie à une bobine primaire enroulée autour d'un plot haute tension différent, chaque convertisseur étant destiné à être relié à une phase différente du réseau triphasé.

De préférence, chaque convertisseur du circuit primaire triphasé est relié en sortie à une bobine primaire enroulée autour d'un plot haute tension différent, deux convertisseurs de deux phases du circuit primaire étant destinés à être reliés en parallèle à la phase d'un réseau monophasé, les deux convertisseurs étant configurés pour être pilotés en opposition de phase.

Avantageusement, le premier circuit secondaire comprend trois convertisseurs de puissance secondaire relié chacun à une bobine secondaire enroulée autour d'un plot haute tension différent, les convertisseurs de puissance secondaires étant destinés à être reliés à une première batterie.

Selon une autre caractéristique, le premier circuit secondaire comprend trois bobines secondaires reliées entre elles en série et enroulées chacune autour d'un plot haute tension différent et un convertisseur de puissance secondaire relié aux bobines secondaires, le convertisseur étant destiné à être relié à une première batterie.

Avantageusement, le deuxième circuit secondaire comprend une bobine basse tension enroulée autour du plot basse tension et un convertisseur de puissance basse tension relié à la bobine basse tension, le convertisseur étant destiné à être relié à une deuxième batterie.

L'invention a également pour objet un véhicule automobile comprenant deux batteries et un chargeur tel que défini précédemment, une première batterie étant reliée au premier circuit secondaire et une deuxième batterie étant reliée au deuxième circuit secondaire, la tension aux bornes de la première batterie étant supérieure à la tension aux bornes de la deuxième batterie.

L'invention a également pour objet un procédé de charge de batteries pour véhicule automobile.

Le procédé comprend une régulation de l'énergie électrique transmise par un circuit primaire à deux circuits secondaires, le circuit primaire étant relié à un réseau électrique et à trois plots haute tension d'un transformateur, un premier circuit secondaire étant relié aux trois plots haute tension et à une première batterie, le deuxième circuit secondaire étant relié à un plot basse tension du transformateur et à une deuxième batterie, les plots haute tension et basse tension étant disposés dans le transformateur de sorte que les inductances mutuelles entre chacun des bobinages du circuit primaire soient égales et de sorte que les inductances mutuelles entre chacun des bobinages du circuit primaire et un bobinage du deuxième circuit secondaire soient égales, cette condition étant satisfaite par une équidistance des plots haute tension entre eux et une équidistance entre chacun des plots haute tension et le plot basse tension, la régulation de la puissance transmise aux première et deuxième batteries étant déterminée selon le déphasage entre des signaux de commande du circuit primaire.

Selon une caractéristique, le procédé comprend une charge de la deuxième batterie lorsque le déphasage entre les signaux de commande pilotant des convertisseurs de puissance du circuit primaire est inférieur à Pi/3.

Avantageusement, le procédé comprend en outre un transfert d'énergie électrique entre les première et deuxième batteries par l'intermédiaire du transformateur, le transfert comprenant une correction de la dérive de flux générée par la conversion de l'énergie électrique d'une batterie émettrice choisie parmi l'une des première et deuxième batteries en modifiant la durée d'un créneau de tension généré à partir de la batterie émettrice, le créneau alimentant le transformateur.

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] illustre schématiquement un véhicule comportant un premier mode de réalisation d'un chargeur selon l'invention ;
[Fig 2] illustre schématiquement un mode de réalisation des convertisseurs de puissance du chargeur ;
[Fig 3] illustre schématiquement un mode de réalisation d'un transformateur du chargeur selon l'invention ;
[Fig 4] illustre schématiquement un mode de réalisation d'un demi-élément magnétique du transformateur selon l'invention ;
[Fig 5] illustre un exemple de signaux de commande du chargeur selon l'invention ;
[Fig 6] illustre un exemple d'évolution des flux des plots haute tension et du plot basse tension pour un déphasage de π/3 ;
[Fig 7] illustre un exemple d'évolution des flux des plots haute tension et du plot basse tension pour un déphasage inférieur à π/3 ;
[Fig 8] illustre schématiquement une partie du chargeur selon l'invention ;
[Fig 9] illustre schématiquement un circuit de contrôle de flux selon l'invention ;
[Fig 10]

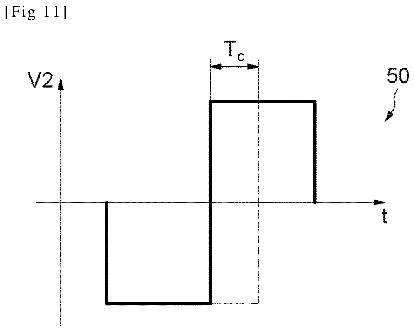

[Fig 11] illustrent schématiquement des créneaux de tension généré par un convertisseur de puissance électrique ; et

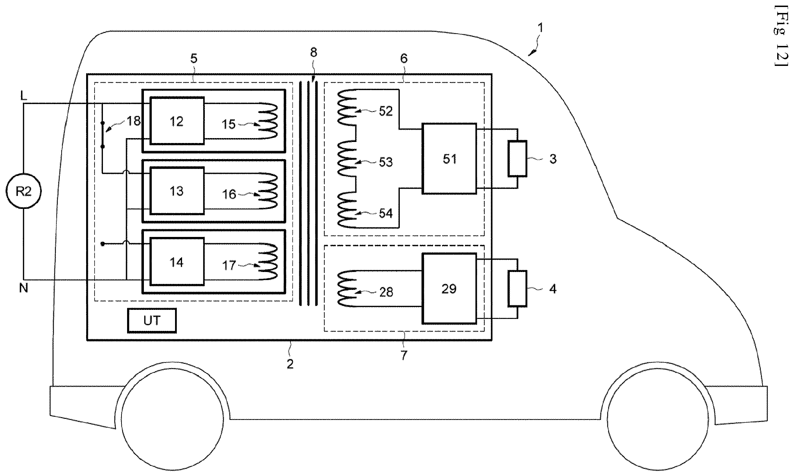

[Fig 12] illustre schématiquement un deuxième mode de réalisation d'un chargeur selon l'invention.

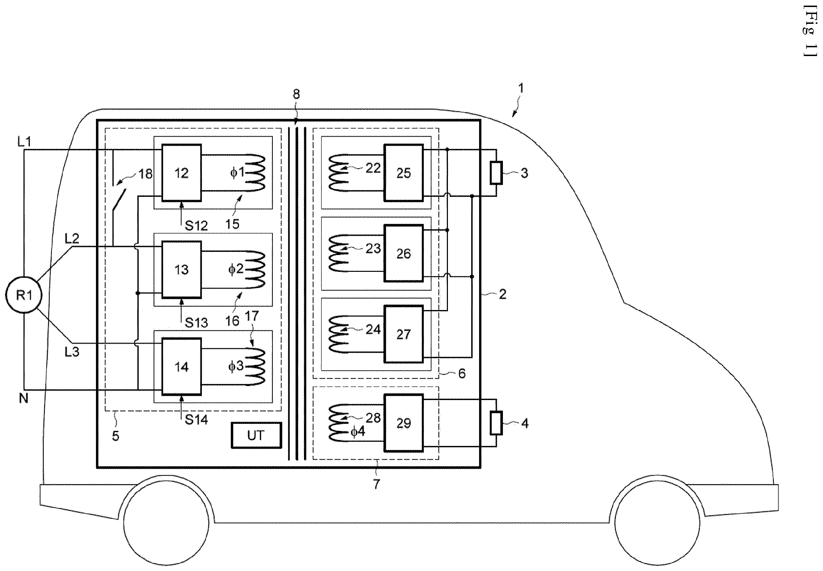

La figure 1 illustre un réseau électrique R1 triphasé délivrant par exemple 16 ampères par phase, et un véhicule automobile 1 hybride ou électrique comprenant un premier mode de réalisation d'un chargeur réversible 2 de batteries, alimenté par le réseau électrique R1, pour recharger ou décharger une première batterie 3 et une deuxième batterie 4 reliées au chargeur 2.

La tension aux bornes de la première batterie 3 est supérieure à la tension aux bornes de la deuxième batterie 4, la première batterie 3 étant par exemple une batterie de traction ayant une tension à ses bornes égale à 400 volts et la tension aux bornes de la deuxième batterie 4 étant par exemple égale à 48 volts destinée à alimenter par exemple des calculateurs ou des auxiliaires électriques les plus puissants du véhicule 1.

Le chargeur 2 comprend un circuit primaire 5 relié au réseau R1, deux circuits secondaires 6 et 7 reliés au circuit primaire 5 par l'intermédiaire d'un transformateur 8, et une unité de traitement UT.

Le circuit primaire 5 comprend trois convertisseurs de puissance électrique primaires 12, 13 et 14 reliés en entrée chacun, d'une part à une phase L1, L2 et L3 différente du réseau R1, et d'autre part au neutre N du réseau R1.

Chaque convertisseur primaire 12, 13, 14 est relié en sortie à une bobine primaire respective 15, 16 et 17 alimentée par le convertisseur de puissance électrique primaire respectif 12, 13 et 14 et formant les enroulements primaires du transformateur 8.

Le circuit primaire 5 peut comprendre en outre un interrupteur 18 reliant les deux phases L1 et L2 du circuit primaire 5.

L'interrupteur 18 est à l'état ouvert lorsque le chargeur 5 est relié au réseau R1,

Le premier circuit secondaire 6 comprend trois convertisseurs de puissance secondaire 25, 26 et 27 reliés chacun à une bobine secondaire 22, 23 et 24, chaque convertisseur de puissance secondaire 25, 26 et 27 étant en outre relié à la première batterie 3. Les bobines secondaires 22, 23 et 24 forment une première partie des enroulements secondaires du transformateur 8.

Le deuxième circuit secondaire 7 comprend une bobine basse tension 28 formant la deuxième partie des enroulements secondaires du transformateur 8, et un convertisseur de puissance basse tension 29 relié à la bobine basse tension 28, le convertisseur de puissance basse tension étant en outre relié à la deuxième batterie 4.

Le chargeur 2 charge les première et deuxième batteries 3, 4 à partir du réseau R1.

Les convertisseurs de puissance électriques primaires 12, 13 et 14 sont réalisés à partir de composants à quatre quadrants comprenant notamment des diodes et des transistors.

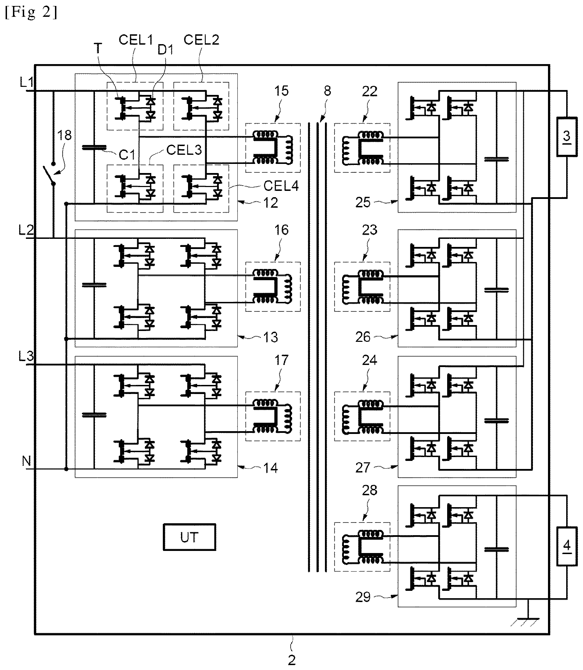

La figure 2 illustre un exemple de mode de réalisation des convertisseurs de puissance du chargeur 2.

Comme les convertisseurs de puissance électriques primaires 12, 13 et 14, secondaires 25, 26 et 27, et basse tension 29 sont d'architecture identique, seul l'architecture du convertisseur de puissance primaire 12 est détaillé.

Le convertisseur 12 comprend quatre cellules de commutation CEL1 à CEL4 comportant chacune un transistor T comprenant une diode de roue libre D1, et un condensateur C1.

Une entrée d'une première cellule CEL1 est reliée à la phase L1 à une première extrémité du condensateur C1 et une entrée d'une deuxième cellule CEL2.

Une sortie de la cellule CEL1 est reliée à une entrée d'une troisième cellule CEL3 et à une première extrémité du bobinage 15.

Une sortie de la troisième cellule CEL3 est reliée au neutre N, à une deuxième extrémité du condensateur C1 et à une sortie d'une quatrième cellule CEL4.

Une sortie de la deuxième cellule CEL2 est reliée à une entrée de la quatrième cellule CEL4 et à une deuxième extrémité du bobinage 15.

Les convertisseurs de puissance électriques secondaires 25, 26 et 27 et le convertisseur de puissance basse tension 29 sont par exemple du type réversible et sont réalisés à partir de diodes et de transistors.

Les première et deuxième batteries 3, 4 peuvent délivrer de l'énergie électrique au réseau R1 par l'intermédiaire du chargeur 2.

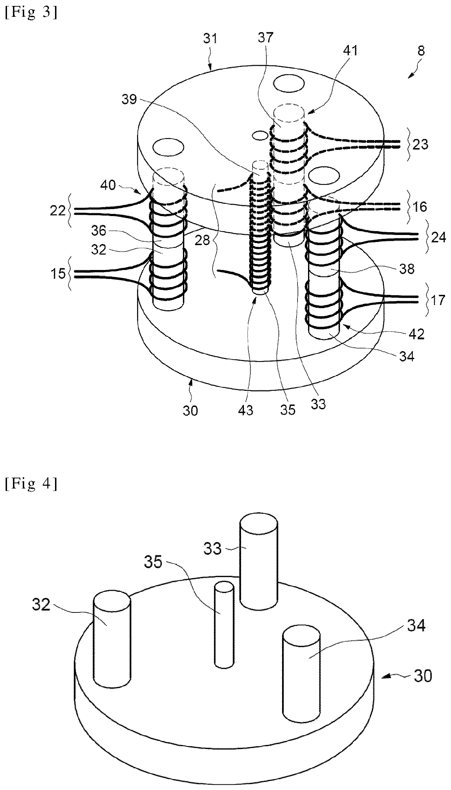

Le figure 3 illustre un mode de réalisation du transformateur 8 comportant les bobines primaires 15, 16 et 17, les bobines secondaires 25, 26 et 27, et la bobine basse tension 28.

Le transformateur 8 comprend un premier demi-élément magnétique 30 et un deuxième demi-élément magnétique 31 identiques et superposés, réalisés par exemple en ferrite.

Les demi-éléments 30, 31 sont par exemple circulaires.

La figure 4 illustre un mode de réalisation du demi-élément magnétique 30.

Le premier demi-élément magnétique 30 comprend trois demi-plots haute tension 32, 33 et 34, et un demi-plot basse tension 35.

De manière analogue, le deuxième demi-élément 31 comprend trois demi-plots haute tension 36, 37 et 38, et un demi-plot basse tension 39.

Les premier et deuxième demi-éléments 30 et 31 sont superposés l'un sur l'autre de sorte que les demi-plots haute tension 32, 33 et 34 et le demi-plot basse tension 35 du premier demi-élément 30 soient en contact avec les demi-plots haute tension 36, 37 et 38 et le demi-plot basse tension 39 du deuxième demi-élément 31, les demi-plots 32 et 36, 33 et 37, 34 et 38 ainsi en contact formant respectivement des plots haute tension 40, 41 et 42, et les demi-plots basse tension 35 et 39 ainsi en contact formant un plot basse tension 43 (figure 2).

Les bobines primaires 15, 16 et 17 sont par exemple bobinées sur les demi-plots haute tension 32, 33 et 34 du premier demi-élément 30, et les bobines secondaires 22, 23 et 24 sont par exemple bobinées sur les demi-plots haute tension 36, 37 et 38 du deuxième demi-élément 31.

La bobine basse tension 28 est par exemple bobinée sur le plot basse tension 43.

Les plots haute tension 40, 41 et 42 et basse tension 43 sont disposés dans le transformateur de sorte que les inductances mutuelles M1, M2, M3 entre les bobines 15 et 16, 16 et 17, et 15 et 17 du circuit primaire soient égales, et de sorte que les inductances mutuelles M4, M5 et M6 entre chaque couple de bobines 15 et 22, 16 et 23, 17 et 24 entre le circuit primaire et le premier circuit secondaire 6 soient égales. De même les inductances mutuelles entre d'une part chaque bobine primaire 15, 16, 17 et d'autre part la bobine secondaire 28 sont égales, et les inductances mutuelles entre d'une part chaque bobine secondaire 22, 23, 24 et d'autre part la bobine secondaire 28 sont égales

Par exemple, comme représenté à la figure 4, lorsque les demi-éléments 30, 31 sont circulaires, le plot basse tension 43 est disposé au centre du disque et les plots haute tension 40, 41 et 42 sont disposés à équidistance les uns des autres de façon à obtenir la même inductance mutuelle entre les enroulements, deux plots haute tension adjacents formant un angle de 120° par rapport au plot basse tension.

Le transformateur 8 permet de relier entre eux le circuit primaire 5, le premier circuit secondaire 6 et le deuxième circuit secondaire 7 en réduisant la complexité, notamment en diminuant le nombre de bobines, et l'encombrement du circuit magnétique, notamment en diminuant le volume de ferrite.

La diminution du volume de ferrite diminue les pertes fer, et de fait réduit la longueur de cuivre des bobines diminuant les pertes cuivre, contribuant à améliorer le rendement du chargeur 2.

En outre, la géométrie du circuit magnétique du transformateur 8 comprenant les premier et deuxième demi-éléments 30, 31 induit un équilibrage des couplages magnétiques au sein du circuit magnétique permettant une stratégie de pilotage similaire de chacune des phases du chargeur 2.

La stratégie de pilotage peut par exemple comprendre le pilotage d'un déphasage entre chaque bobinage 15, 16 et 17 du circuit primaire 5 et le neutre N du réseau R1 ou la mise en oeuvre de phase de roue libre.

Selon un premier mode de mise en oeuvre du chargeur 2, le chargeur 2 charge les batteries 3, 4.

La puissance électrique transmise aux batteries 3, 4 par le chargeur 2 est déterminée selon le déphasage ϕ entre des signaux de commande S12, S13 et S14 des convertisseurs de puissance primaire 12, 13 et 14, les signaux de commande pilotant les transistors desdits convertisseurs de puissance.

Le déphasage ϕ entre les signaux de commande crée une composante homopolaire entre les phases du circuit primaire 5 en déséquilibrant le déphasage des flux magnétiques Φ1, Φ2 et Φ3 générés par les bobines primaires 15, 16 et 17 à la fréquence de découpage des convertisseurs de puissance 12, 13 et 14.

On note Φ4 le flux magnétique transféré au plot basse tension 43 par les plots haute tension 40, 41 et 42, le flux Φ4 étant transféré à la bobine basse tension 28.

La composante homopolaire, associée au pilotage des convertisseurs secondaires 25, 26, 27, 29 permet de discriminer le flux de puissance transitant du réseau R1 vers les première et deuxième batteries 3, 4.

Les signaux de commande S12, S13 et S14 sont générés par l'unité de traitement UT.

En outre, l'unité de traitement UT commande les convertisseurs de puissance 25, 26, 27 et 29.

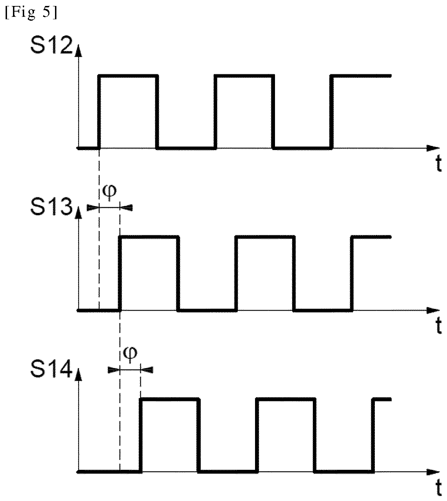

La figure 5 illustre un exemple de signaux de commande S12, S13 et S14 déphasés du déphasage ϕ selon le temps t.

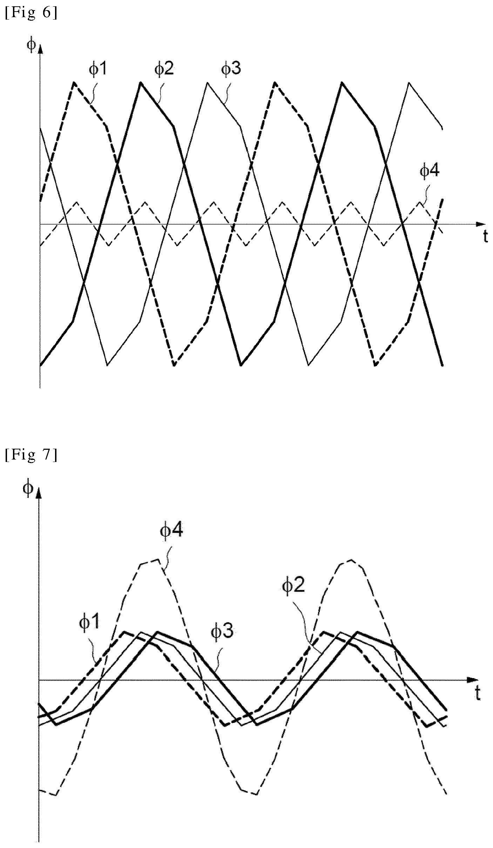

On se réfère à la figure 6 qui illustre l'évolution temporelle des flux magnétiques Φ1, Φ2, Φ3 et Φ4 lorsque le déphasage ϕ est égal à π/3.

L'amplitude du flux Φ4 est faible par rapport à l'amplitude des flux Φ1, Φ2 et Φ3 de sorte que la tension induite dans la bobine 28 est de petite d'amplitude.

Comme la tension induite dans la bobine 28 est faible, les transistors du convertisseur 29 peuvent être bloqués de sorte qu'aucun courant n'est transféré vers la batterie 4 via leurs diodes de roue libre.

La puissance électrique transférée par le chargeur 2 charge exclusivement la première batterie 3.

La figure 7 illustre l'évolution temporelle des flux Φ1, Φ2, Φ3 et Φ4 lorsque le déphasage ϕ est inférieur à π/3.

Les flux Φ1, Φ2, Φ3 génèrent le flux Φ4 d'amplitude suffisamment grande pour induire une tension dans la bobine 28 suffisamment importante pour charger la deuxième batterie 4 par l'intermédiaire du convertisseur 29, les flux Φ1, Φ2, Φ3 générant en outre des tensions induites dans les bobines 22, 23 et 24 suffisamment importantes pour charger la première batterie 3 par l'intermédiaire du premier circuit secondaire 6.

Selon un deuxième mode de mise en oeuvre, le chargeur 2 transfert de l'énergie électrique entre les première et deuxième batteries 3, 4 par l'intermédiaire du transformateur 8, le circuit primaire 5 n'étant pas alimenté par le réseau R1.

Comme les différentes phases des circuits primaire et secondaire 5, 6 sont identiques, un exemple de transfert d'énergie d'une batterie à l'autre est détaillé en mettant en oeuvre les convertisseurs 12 et 25, le procédé s'appliquant de manière identique aux autres convertisseurs.

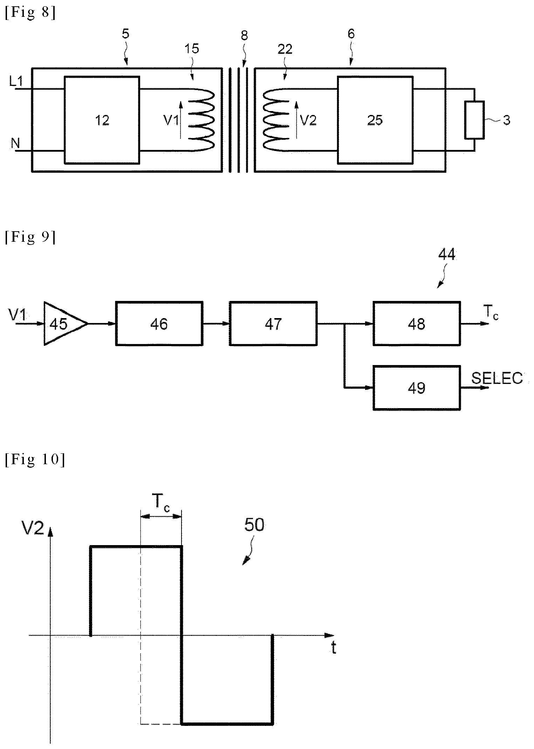

Dans un but de simplification, la figure 8 représente le convertisseur 12 du circuit primaire 5 relié à la phase L1 et au neutre du circuit R1, le convertisseur 25 du premier circuit secondaire 6 étant relié à la première batterie 3, et le transformateur 8 reliant les circuits 5 et 6.

Une tension V1 est générée aux bornes de la bobine 15 du convertisseur 12 du fait de l'échange d'énergie entre les deux batteries, et une tension V2 est générée aux bornes de la bobine 22 du convertisseur 25.

On suppose que l'énergie de la première batterie 3 est transférée à la deuxième batterie 4 par l'intermédiaire du deuxième circuit secondaire 7 (non représenté).

En variante, l'énergie de la deuxième batterie 4 est transférée à la première batterie 3.

Lors du transfert d'énergie, apparaît généralement une dérive de flux générée par la conversion d'énergie électrique.

Pour corriger la dérive de flux, l'unité de traitement UT met en oeuvre un circuit de contrôle 44 de flux illustré à la figure 9.

L'unité de traitement UT corrige la dérive de flux générée par la conversion d'énergie électrique d'une batterie émettrice choisie parmi l'une des batteries 3,4 en modifiant la durée de la partie positive ou négative d'un créneau 50 de tension généré à partir de la batterie émettrice, le créneau alimentant le transformateur 8.

Le circuit de contrôle 44 de flux comprend un gain 45 recevant en entrée la tension V1, un intégrateur 46 comprenant une entrée reliée à la sortie du gain 45 et une sortie reliée à l'entrée d'un filtre passe-bas 47.

Le circuit de contrôle 44 comprend en outre un module de détermination d'une durée 48 générant une durée de correction Tc et un module de détermination de signe 49 d'un signal générant un signal représentatif d'un signe SELEC, une entrée du module de détermination d'une durée 48 et une entrée du module de détermination de signe 49 étant reliées à une sortie du filtre 47.

Le traitement de la tension V1 par le circuit de contrôle 44 permet de détecter et corriger la dérive de flux en allongeant ou réduisant la durée de la partie positive ou négative du créneau de tension 50 générée par la bobine 22 en additionnant ou en retranchant la durée de correction Tc selon la valeur du signe SELEC, le créneau de tension étant appliqué au transformateur 8.

Le signe SELEC est une image de la valeur moyenne du flux du transformateur 8 indiquant le sens de la correction à appliquer, la valeur étant idéalement nulle.

Les figures 10 et 11 illustrent respectivement une diminution de la partie positive du créneau 50 (en pointillé) sur front descendant en retranchant la durée Tc et une augmentation de la partie négative du créneau 50 (en pointillé) sur front montant en additionnant la durée Tc.

Le transfert d'énergie d'une batterie à l'autre permet d'assurer une redondance de stockage d'énergie requise notamment pour l'alimentation d'équipements sécuritaires tels que des capteurs et des calculateurs pour la conduite autonome du véhicule 1.

Le transfert d'énergie d'une batterie à l'autre permet en outre de précharger le premier circuit secondaire 6 « haute tension » à partir de la deuxième batterie 4 sans dispositif additionnel de précharge interne à la première batterie 3.

Dans ce qui suit les éléments identiques à ceux décrits précédemment portent la même référence.

La figure 12 illustre un réseau électrique R2 monophasé comprenant une phase L délivrant par exemple 32 ampères et le véhicule automobile 1 hybride ou électrique alimenté par le réseau électrique R2, le véhicule 1 comprenant un deuxième mode de réalisation du chargeur 2.

Le chargeur 2 diffère du premier mode de réalisation du chargeur 2 illustré à la figure 1 en ce que l'interrupteur 18 est fermé de sorte que la phase L du réseau R2 alimente les convertisseurs 12 et 13 du circuit primaire 5, le convertisseur 14 n'étant pas alimenté.

Les convertisseurs 12 et 13 sont commandés en opposition de phase de façon à minimiser le spectre de courant conduit par les deux phases L1, L2.

Selon l'état de l'interrupteur 18, le chargeur 2 peut être alimentée par le réseau monophasé R2 (interrupteur fermé) ou triphasé R1 (interrupteur ouvert) sans modification structurelle du chargeur 2 et sans surdimensionnement électrique ou magnétique du chargeur 2.

En outre, comme les deux convertisseurs 12 et 13 sont mis en parallèle, le courant délivré par la phase L du réseau R2 peut être doublé par rapport au courant délivré par l'une des phases du réseau triphasé R1.

De plus, le premier circuit secondaire 6 diffère du circuit secondaire du premier mode de réalisation du chargeur 2 illustré à la figure 1 en ce qu'il comprend un seul convertisseur de puissance électrique réversible 51 relié à trois bobines secondaires 52, 53 et 54 reliées entre elles en série.

Le convertisseur 51 est en outre relié à la première batterie 3.

Chaque bobine secondaire 52, 53 et 54 est bobinée sur un demi-plot primaire 36, 37 et 38 différent du deuxième demi-élément 31.

## Revendications

1. Chargeur de batteries (2) pour véhicule automobile (1) comprenant un circuit primaire (5) destiné à être relié à un réseau d'alimentation électrique (R1, R2), ledit circuit primaire comportant trois convertisseurs aptes à être reliés chacun en entrée à une phase d'un réseau triphasé, et deux circuits secondaires (6, 7) reliés au circuit primaire par l'intermédiaire d'un transformateur (8), **caractérisé en ce que** le transformateur comprend trois plots haute tension (40, 41, 42) et un plot basse tension (43), le circuit primaire et un premier circuit secondaire étant relié aux plots haute tension, le deuxième circuit secondaire étant relié au plot basse tension, les plots haute tension et basse tension étant disposés dans le transformateur de sorte que les inductances mutuelles entre des bobinages (15, 16, 17) du circuit primaire soient égales et de sorte que les inductances mutuelles entre chacun des bobinages du circuit primaire et un bobinage du deuxième circuit secondaire soient égales, cette condition étant satisfaite par une équidistance des plots haute tension entre eux et une équidistance entre chacun des plots haute tension et le plot basse tension.

2. Chargeur selon la revendication 1, dans lequel chaque convertisseur (12, 13, 14) du circuit primaire triphasé est relié en sortie à une bobine primaire (15, 16, 17) enroulée autour d'un plot haute tension (40, 41, 42) différent, chaque convertisseur étant destiné à être relié à une phase différente du réseau triphasé (R1).

3. Chargeur selon la revendication 1, dans lequel chaque convertisseur (12, 13, 14) du circuit primaire triphasé est relié en sortie à une bobine primaire (15, 16, 17) enroulée autour d'un plot haute tension (40, 41, 42) différent, deux convertisseurs (12, 13) du circuit primaire étant destinés à être reliés en parallèle à la phase d'un réseau monophasé (R2), les deux convertisseurs étant configurés pour être pilotés en opposition de phase.

4. Chargeur selon l'une des revendications 1 à 3, dans lequel le premier circuit secondaire (6) comprend trois convertisseurs de puissance secondaire (25, 26, 27) relié chacun à une bobine secondaire (22, 23, 24) enroulée autour d'un plot haute tension (40, 41, 42) différent, les convertisseurs de puissance secondaires étant destinés à être reliés à une première batterie (3).

5. Chargeur selon l'une des revendications 1 à 3, dans lequel le premier circuit secondaire (6) comprend trois bobines secondaires (52, 53, 54) reliées entre elles en série et enroulées chacune autour d'un plot haute tension (40, 41, 42) différent et un convertisseur de puissance secondaire (51) relié aux bobines secondaires, le convertisseur étant destiné à être relié à une première batterie (3).

6. Chargeur selon l'une de revendications 1 à 5, dans lequel le deuxième circuit secondaire (7) comprend une bobine basse tension (28) enroulée autour du plot basse tension (43) et un convertisseur de puissance basse tension (29) relié à la bobine basse tension, le convertisseur étant destiné à être relié à une deuxième batterie (4).

7. Véhicule automobile (1) comprenant deux batteries (3, 4) et un chargeur (2) selon l'une des revendications 1 à 6, une première batterie (3) étant reliée au premier circuit secondaire (6) et une deuxième batterie (4) étant reliée au deuxième circuit secondaire (7), la tension aux bornes de la première batterie étant supérieure à la tension aux bornes de la deuxième batterie.

8. Procédé de charge de batteries (3, 4) pour véhicule automobile (1) **caractérisé en ce que** le procédé comprend une régulation de l'énergie électrique transmise par un circuit primaire (5) à deux circuits secondaires (6, 7), le circuit primaire étant relié à un réseau électrique et à trois plots haute tension (40, 41, 42) d'un transformateur (8), un premier circuit secondaire étant relié aux trois plots haute tension et à une première batterie (3), le deuxième circuit secondaire étant relié à un plot basse tension (43) du transformateur et à une deuxième batterie (4), les plots haute tension et basse tension étant disposés dans le transformateur de sorte que les inductances mutuelles entre chacun des bobinages du circuit primaire soient égales et de sorte que les inductances mutuelles entre chacun des bobinages du circuit primaire et un bobinage du deuxième circuit secondaire soient égales, cette condition étant satisfaite par une équidistance des plots haute tension entre eux et une équidistance entre chacun des plots haute tension et le plot basse tension, la régulation de la puissance transmise aux première et deuxième batteries étant déterminée selon le déphasage (ϕ) entre des signaux de commande (S12, S13, S14) du circuit primaire.

9. Procédé selon la revendication 8, comprenant une charge de la deuxième batterie (4) lorsque le déphasage (ϕ) entre les signaux de commande (S12, S13, S14) pilotant des convertisseurs de puissance du circuit primaire (5) est inférieur à Pi/3.

10. Procédé selon l'une des revendications 8 et 9, comprenant en outre un transfert d'énergie électrique entre les première et deuxième batteries (3, 4) par l'intermédiaire du transformateur (8), le transfert comprenant une correction de la dérive de flux générée par la conversion de l'énergie électrique d'une batterie émettrice choisie parmi l'une des première et deuxième batteries en modifiant la durée d'un créneau de tension (50) généré à partir de la batterie émettrice, le créneau alimentant le transformateur (8).

## Patentansprüche

1. Batterieladegerät (2) für ein Kraftfahrzeug (1), das einen Primärkreis (5), der dazu bestimmt ist, mit einem Stromversorgungsnetz (R1, R2) verbunden zu werden, wobei der Primärkreis drei Wandler aufweist, die fähig sind, je am Eingang mit einer Phase eines Dreiphasennetzes verbunden zu werden, und zwei Sekundärkreise (6, 7) enthält, die mittels eines Transformators (8) mit dem Primärkreis verbunden sind, **dadurch gekennzeichnet, dass** der Transformator drei Hochspannungskontakte (40, 41, 42) und einen Niederspannungskontakt (43) enthält, wobei der Primärkreis und ein erster Sekundärkreis mit den Hochspannungskontakten verbunden sind, wobei der zweite Sekundärkreis mit dem Niederspannungskontakt verbunden ist, wobei die Hoch- und Niederspannungskontakte so im Transformator angeordnet sind, dass die gegenseitigen Induktivitäten zwischen Wicklungen (15, 16, 17) des Primärkreises gleich sind, und so angeordnet sind, dass die gegenseitigen Induktivitäten zwischen jeder der Wicklungen des Primärkreises und einer Wicklung des zweiten Sekundärkreises gleich sind, wobei diese Bedingung durch eine Äquidistanz der Hochspannungskontakte untereinander und einer Äquidistanz zwischen jedem der Hochspannungskontakte und dem Niederspannungskontakt erfüllt wird.

2. Ladegerät nach Anspruch 1, wobei jeder Wandler (12, 13, 14) des dreiphasigen Primärkreises am Ausgang mit einer Primärspule (15, 16, 17) verbunden ist, die um einen unterschiedlichen Hochspannungskontakt (40, 41, 42) gewickelt ist, wobei jeder Wandler dazu bestimmt ist, mit einer unterschiedlichen Phase des Dreiphasennetzes (R1) verbunden zu werden.

3. Ladegerät nach Anspruch 1, wobei jeder Wandler (12, 13, 14) des dreiphasigen Primärkreises am Ausgang mit einer Primärspule (15, 16, 17) verbunden ist, die um einen unterschiedlichen Hochspannungskontakt (40, 41, 42) gewickelt ist, wobei zwei Wandler (12, 13) des Primärkreises dazu bestimmt sind, parallel mit der Phase eines Einphasennetzes (R2) verbunden zu werden, wobei die zwei Wandler konfiguriert sind, in Gegenphase gesteuert zu werden.

4. Ladegerät nach einem der Ansprüche 1 bis 3, wobei der erste Sekundärkreis (6) drei Sekundärleistungswandler (25, 26, 27) enthält, die je mit einer Sekundärspule (22, 23, 24) verbunden sind, die um einen unterschiedlichen Hochspannungskontakt (40, 41, 42) gewickelt ist, wobei die Sekundärleistungswandler dazu bestimmt sind, mit einer ersten Batterie (3) verbunden zu werden.

5. Ladegerät nach einem der Ansprüche 1 bis 3, wobei der erste Sekundärkreis (6) drei Sekundärspulen (52, 53, 54), die miteinander in Reihe verbunden und je um einen unterschiedlichen Hochspannungskontakt (40, 41, 42) gewickelt sind, und einen mit den Sekundärspulen verbundenen Sekundärleistungswandler (51) enthält, wobei der Wandler dazu bestimmt ist, mit einer ersten Batterie (3) verbunden zu werden.

6. Ladegerät nach einem der Ansprüche 1 bis 5, wobei der zweite Sekundärkreis (7) eine um den Niederspannungskontakt (43) gewickelte Niederspannungsspule (28) und einen mit der Niederspannungsspule verbundenen Niederspannungsleistungswandler (29) enthält, wobei der Wandler dazu bestimmt ist, mit einer zweiten Batterie (4) verbunden zu werden.

7. Kraftfahrzeug (1), das zwei Batterien (3, 4) und ein Ladegerät (2) nach einem der Ansprüche 1 bis 6 enthält, wobei eine erste Batterie (3) mit dem ersten Sekundärkreis (6) und eine zweite Batterie (4) mit dem zweiten Sekundärkreis (7) verbunden ist, wobei die Spannung an den Klemmen der ersten Batterie höher ist als die Spannung an den Klemmen der zweiten Batterie.

8. Ladeverfahren von Batterien (3, 4) für ein Kraftfahrzeug (1), **dadurch gekennzeichnet, dass** das Verfahren eine Regelung der von einem Primärkreis (5) an zwei Sekundärkreise (6, 7) übertragenen elektrischen Energie enthält, wobei der Primärkreis mit einem Stromnetz und mit drei Hochspannungskontakten (40, 41, 42) eines Transformators (8) verbunden ist, wobei ein erster Sekundärkreis mit den drei Hochspannungskontakten und mit einer ersten Batterie (3) verbunden ist, wobei der zweite Sekundärkreis mit einem Niederspannungskontakt (43) des Transformators und mit einer zweiten Batterie (4) verbunden ist, wobei die Hoch- und Niederspannungskontakte so im Transformator angeordnet sind, dass die gegenseitigen Induktivitäten zwischen jeder der Wicklungen des Primärkreises gleich sind, und so angeordnet sind, dass die gegenseitigen Induktivitäten zwischen jeder der Wicklungen des Primärkreises und einer Wicklung des zweiten Sekundärkreises gleich sind, wobei diese Bedingung durch eine Äquidistanz des Hochspannungskontakte untereinander und einer Äquidistanz zwischen jedem der Hochspannungskontakte und dem Niederspannungskontakt erfüllt wird, wobei die Regelung der an die erste und die zweite Batterie übertragenen Leistung gemäß der Phasenverschiebung (ϕ) zwischen Steuersignalen (S12, S13, Sl4) des Primärkreises bestimmt wird.

9. Verfahren nach Anspruch 8, das ein Laden der zweiten Batterie (4) enthält, wenn die Phasenverschiebung (ϕ) zwischen den Leistungswandler des Primärkreises (5) steuernden Steuersignalen (S12, S13, Sl4) geringer ist als Pi/3.

10. Verfahren nach einem der Ansprüche 8 und 9, das außerdem einen Transfer elektrischer Energie zwischen den ersten und zweiten Batterien (3, 4) mittels des Transformators (8) enthält, wobei der Transfer eine Korrektur der Flussdrift enthält, die durch die Umwandlung der elektrischen Energie einer emittierenden Batterie erzeugt wird, die unter einer der ersten und zweiten Batterien ausgewählt wird, indem die Dauer eines ausgehend von der emittierenden Batterie erzeugten Spannungsrechtecks (50) geändert wird, wobei das Rechteck den Transformator (8) speist.

## Claims

1. Battery charger (2) for a motor vehicle (1), said battery charger comprising a primary circuit (5) intended to be connected to an electrical power grid (R1, R2), said primary circuit comprising three converters that are each able to be connected input-side to one phase of a three-phase grid, and two secondary circuits (6, 7) that are connected to the primary circuit via a transformer (8), **characterized in that** the transformer comprises three high-voltage cores (40, 41, 42) and one low-voltage core (43), the primary circuit and a first secondary circuit being connected to the high-voltage cores, the second secondary circuit being connected to the low-voltage core, the high-voltage and low-voltage cores being arranged in the transformer so that the mutual inductances between windings (15, 16, 17) of the primary circuit are equal and so that the mutual inductances between each of the windings of the primary circuit and a winding of the second secondary circuit are equal, this condition being met by placing the high-voltage cores equidistant from one another and by placing each of the high-voltage cores and the low-voltage core equidistant.

2. Charger according to Claim 1, wherein each converter (12, 13, 14) of the three-phase primary circuit is connected output-side to a primary coil (15, 16, 17) wound around a different high-voltage core (40, 41, 42), each converter being intended to be connected to a different phase of the three-phase grid (R1).

3. Charger according to Claim 1, wherein each converter (12, 13, 14) of the three-phase primary circuit is connected output-side to a primary coil (15, 16, 17) wound around a different high-voltage core (40, 41, 42), two converters (12, 13) of the primary circuit being intended to be connected in parallel to the phase of a single-phase grid (R2), the two converters being configured to be driven in phase opposition.

4. Charger according to one of Claims 1 to 3, wherein the first secondary circuit (6) comprises three secondary power converters (25, 26, 27) each connected to one secondary coil (22, 23, 24) wound around a different high-voltage core (40, 41, 42), the secondary power converters being intended to be connected to a first battery (3).

5. Charger according to one of Claims 1 to 3, wherein the first secondary circuit (6) comprises three secondary coils (52, 53, 54) connected to one another in series and each wound around one different high-voltage core (40, 41, 42) and one secondary power converter (51) connected to the secondary coils, the converter being intended to be connected to a first battery (3).

6. Charger according to one of Claims 1 to 5, wherein the second secondary circuit (7) comprises a low-voltage coil (28) wound around the low-voltage core (43) and a low-voltage power converter (29) connected to the low-voltage coil, the converter being intended to be connected to a second battery (4).

7. Motor vehicle (1) comprising two batteries (3, 4) and a charger (2) according to one of Claims 1 to 6, a first battery (3) being connected to the first secondary circuit (6) and a second battery (4) being connected to the second secondary circuit (7), the voltage across the terminals of the first battery being higher than the voltage across the terminals of the second battery.

8. Method for charging batteries (3, 4) for a motor vehicle (1), **characterized in that** the method comprises regulation of the electrical energy transmitted by a primary circuit (5) to two secondary circuits (6, 7), the primary circuit being connected to an electrical grid and to three high-voltage cores (40, 41, 42) of a transformer (8), a first secondary circuit being connected to the three high-voltage cores and to a first battery (3), the second secondary circuit being connected to a low-voltage core (43) of the transformer and to a second battery (4), the high-voltage and low-voltage cores being arranged in the transformer so that the mutual inductances between each of the windings of the primary circuit are equal and so that the mutual inductances between each of the windings of the primary circuit and a winding of the second secondary circuit are equal, this condition being met by placing the high-voltage cores equidistant from one another and by placing each of the high-voltage cores and the low-voltage core equidistant, the regulation of the power transmitted to the first and second batteries being determined depending on the phase difference (ϕ) between control signals (S12, S13, S14) of the primary circuit.

9. Method according to Claim 8, comprising charging the second battery (4) when the phase difference (ϕ) between the control signals (S12, S13, S14) driving the power converters of the primary circuit (5) is smaller than Pi/3.

10. Method according to one of Claims 8 and 9, further comprising a transfer of electrical energy between the first and second batteries (3, 4) via the transformer (8), the transfer comprising correcting the flux drift generated by the conversion of electrical energy from a source battery selected from the first and second batteries, by modifying the duration of a voltage pulse (50) generated from the source battery, the pulse being supplied to the transformer (8).
